# EUROPÄISCHE PATENTSCHRIFT

(11) **EP 4 698 793 B1**
(45) Veröffentlichungstag und Bekanntmachung des Hinweises auf die Patenterteilung: **26.08.2026**
(21) Anmeldenummer: 24717190.3
(22) Anmeldetag: 04.04.2024
(51) Int. Cl.: F16C 3/02, H02K 1/32, H02K 7/00

(54) **ROTORWELLE FÜR EINE MASCHINE, VERBINDUNGSROHR FÜR EINE ROTORWELLE, MASCHINE MIT EINER SOLCHEN ROTORWELLE SOWIE KRAFTFAHRZEUG**
ROTOR SHAFT FOR A MACHINE, CONNECTION TUBE FOR A ROTOR SHAFT, MACHINE HAVING SUCH A ROTOR SHAFT, AND MOTOR VEHICLE
ARBRE DE ROTOR POUR UNE MACHINE, TUBE DE LIAISON POUR UN ARBRE DE ROTOR, MACHINE COMPRENANT UN TEL ARBRE DE ROTOR ET VÉHICULE À MOTEUR

(30) Priorität: 18.04.2023 DE 102023109654
(43) Veröffentlichungstag der Anmeldung: 25.02.2026
(73) Patentinhaber: Bayerische Motoren Werke Aktiengesellschaft, 80809 München (DE)
(72) Erfinder: HAYDER, Rene, 3314 Strengberg (AT); BARTH, Wilfried, 4351 Saxen (AT); WAGNER, Andreas, 4300 St. Valentin (AT)
(86) Internationale Anmeldenummer: PCT/EP2024/059153
(87) Internationale Veröffentlichungsnummer: WO 2024/217879

(56) Entgegenhaltungen:
- DE-A1- 102020 107 533
- DE-A1- 102020 206 851
- DE-A1- 102020 207 431

## Beschreibung

Die vorliegende Erfindung betrifft eine Rotorwelle für eine Maschine, die beispielsweise als eine elektrische Traktionsmaschine für ein Kraftfahrzeug ausgebildet ist. Weiters betrifft die Erfindung eine Maschine, insbesondere elektrische Traktionsmaschine, mit einer solchen Rotorwelle. Überdies betrifft die Erfindung ein Kraftfahrzeug, das mit der Maschine ausgestattet ist, sowie ein Verbindungsrohr für die Rotorwelle.

Um einen optimalen Betrieb einer elektrischen Antriebs- bzw. Traktionsmaschine zu gewährleisten, ist eine möglichst effiziente Kühlung im Betrieb der Traktionsmaschine essenziell. Es sollen insbesondere Betriebszustände der Traktionsmaschine vermieden werden, in denen eine Steuerung der Traktionsmaschine nur noch ein gedrosseltes Antriebsdrehmoment bereitstellt, um ein unerwünschtes Überhitzen von Bauteilen der Traktionsmaschine zu verhindern. Kommt es zu solch einem Betriebszustand, kann ein Nutzer der Traktionsmaschine, insbesondere ein Fahrer eines mit der Traktionsmaschine ausgerüsteten Kraftfahrzeugs nicht mehr auf die gewohnte, volle Leistung der Traktionsmaschine zurückgreifen; der Nutzer wird durch das Verringern/Drosseln des Antriebsdrehmoments (das Degradation genannt wird) überrascht und muss plötzlich mit der verringerten Leistung auskommen. Dies kann zu Problemen bei Überholmanövern, Berg- bzw. Steigungsfahrten, Anhängerzugbetrieb etc. führen. Es besteht also der Bedarf, solche Betriebszustände bestmöglich zu vermeiden, wozu eine maximaleffiziente Kühlung der Traktionsmaschine erforderlich ist. Maschinen, deren Rotorwelle innenseitig mittels eines Kühlfluids gekühlt wird, sind aus dem Stand der Technik, beispielsweise aus der DE 949 611 B, aus der DE 10 2012 217 361 A1 oder aus der DE 10 2014 204 133 A1, bekannt.

Ferner ist in der DE 10 2020 107 533 A1 ein flüssigkeitsgekühlter Rotor für einen elektromechanischen Energiewandler offenbart. Eine Rotorwelle des Rotors ist hohl ausgebildet, wobei sich ein Flüssigkeitsleitrohr in die Rotorwelle hineinerstreckt, wodurch sich zwischen dem Flüssigkeitsleitrohr und der Rotorwelle ein Flüssigkeitsringraum ergibt. Das Flüssigkeitsleitrohr weist eine Flüssigkeitsaustrittsöffnung auf, durch ein Rohrinnenraum des Flüssigkeitsleitrohrs mit dem Flüssigkeitsringraum fluidleitend verbunden ist.

Des Weiteren offenbart die DE 10 2020 207 431 A1 eine elektrische Maschine, in deren Rotorwelle ein Kühlrohr gelagert ist, derart, dass zwischen einer Innenwandung der Rotorwelle und dem Kühlrohr ein Ringspaltkanal gebildet ist. Ein mit einem Kühlmedium durchströmbarer Kühlpfad der elektrischen Maschine verläuft durch das Kühlrohr und nach einer Umlenkung durch den Ringspaltkanal.

Aufgabe der vorliegenden Erfindung ist es, eine Lösung zu schaffen, um eine Rotorwelle einer Maschine, insbesondere einer elektrischen Maschine, noch effizienter zu kühlen.

Diese Aufgabe wird durch die Gegenstände der unabhängigen Ansprüche gelöst.

Weitere mögliche Ausgestaltungen der Erfindung sind in den Unteransprüchen, der Beschreibung und den Figuren offenbart. Merkmale, Vorteile und mögliche Ausgestaltungen, die im Rahmen der Beschreibung für einen der Gegenstände der unabhängigen Ansprüche dargelegt sind, sind kategorie- und ausführungsformübergreifend zumindest analog als Merkmale, Vorteile und mögliche Ausgestaltungen des jeweiligen Gegenstands der anderen unabhängigen Ansprüche sowie jeder möglichen Kombination der Gegenstände der unabhängigen Ansprüche, gegebenenfalls in Verbindung mit einem oder mehr der Unteransprüche, anzusehen.

Erfindungsgemäß wird eine Rotorwelle für eine Maschine vorgeschlagen, die unter anderem ein Verbindungsrohr (das auch als Kühlmittellanze bezeichnet werden kann) aufweist. Die Erfindung bezieht sich des Weiteren auf besagtes Verbindungsrohr allein, sowie auf eine Maschine, die die Rotorwelle und infolgedessen das Verbindungsrohr aufweist. Weiter wird gemäß der Erfindung ein Kraftfahrzeug vorgeschlagen, das die Maschine und infolgedessen die das Verbindungsrohr aufweisende Rotorwelle aufweist. Das bedeutet, dass durch das Verbindungsrohr in dessen bestimmungsgemäßer Einbaulage ein Bestandteil der Rotorwelle gebildet ist, wobei die Rotorwelle in deren bestimmungsgemäßer Einbaulage einen Bestandteil der Maschine bildet. Sobald die Maschine in deren bestimmungsgemäßer Einbaulage angeordnet ist, bildet sie einen Bestandteil des Kraftfahrzeugs. Die Maschine ist dabei insbesondere als eine elektrische Traktionsmaschine für das Kraftfahrzeug ausgebildet, was bedeutet, dass das Kraftfahrzeug als ein reinelektrisch oder hybridelektrisch antreibbares Kraftfahrzeugs ausgeführt ist.

Die Rotorwelle weist ein Außenrohr auf, das zum Beispiel dazu eingerichtet ist, außenseitig drehfest ein Rotorpaket der elektrischen Maschine zu tragen. Für die Maschine gilt also, dass eine Außenumfangsfläche des Außenrohrs und ein Rotor der Maschine drehfest miteinander verbunden sind. Im hohlen Inneren des Außenrohrs weist die Rotorwelle ein Innenrohr auf, wobei das Außenrohr und das Innenrohr koaxial zueinander angeordnet sind. Mit anderen Worten fallen eine Längsmittenachse des Außenrohrs und eine Längsmittenachse des Innenrohrs zusammen, und zwar mit einer Längsmittenachse der Rotorwelle. Das Innenrohr ist derart im Außenrohr gelagert, dass zwischen einer Außenrohrinnenwand des Außenrohrs und einer Innenrohraußenwand des Innenrohrs ein Außenrohrringraum gebildet ist. Zudem weist das Innenrohr eine Innenrohrwandöffnung oder mehr Innenrohrwandöffnungen auf, wobei die jeweilige Innenrohrwandöffnung eine Innenrohrwand des Innenrohrs radiusparallel oder schräg zum Radius vollständig durchdringt. Dadurch kommunizieren das hohle Innere des Innenrohrs und das hohle Innere des Außenrohrs bzw. das hohle Innere des Innenrohrs und der Außenrohrringraum miteinander. Insbesondere weist das Innenrohr einen kegelförmigen Innenrohrfuß auf, der eines der Enden des Innenrohrs bildet und axiale Nuten aufweist, deren Nutboden und die Außenrohrinnenwand radial voneinander beabstandet sind, sodass zwischen dem Innenrohrfuß und der Außenrohrinnenwand axiale Kanäle ausgebildet sind. Weiters ist das Innenrohr mittels des Innenrohrfußes im Außenrohr zentriert gelagert, indem ein Außendurchmesser des Innenrohrs am Innenrohrfuß - anders als am restlichen Innenrohr - das Maß eines Innendurchmessers des Außenrohrs aufweist. Somit kommunizieren das hohle Innere des Innenrohrs und der Außenrohrringraum sowohl mittels der Innenrohrwandöffnungen als auch mittels der Nuten bzw. Kanäle des Innenrohrfußes.

Zudem weist die Rotorwelle einen hohlen Wellenzapfen auf, der einen ersten und einen zweiten Zapfenanteil aufweist, die fest miteinander verbunden sind. Insbesondere sind die Zapfenanteile einstückig miteinander ausgebildet. Der erste Zapfenanteil ragt aus dem Außenrohr heraus und bildet so ein Abtriebselement der Rotorwelle bzw. der Maschine. Beispielsweise ist am ersten Zapfenanteil des hohlen Wellenzapfens ein Stirnradkranz drehfest angeordnet, der dazu eingerichtet ist, mit einem maschinenexternen Stirnrad zu kämmen, etwa mit einem Antriebsstirnrad eines an die Maschine angeflanschten Getriebes. Der zweite Zapfenanteil des hohlen Wellenzapfens ist koaxial im Außenrohr, das heißt im hohlen Inneren des Außenrohrs, angeordnet und entlang der Längsmittenachse der Rotorwelle vom Innenrohr beabstandet. Dabei sind der zweite Zapfenanteil und die Außenrohrinnenwand dicht und drehfest miteinander verbunden. Dadurch ist der Außenrohrringraum durch die Außenrohrinnenwand, die Innenrohraußenwand, eine Stirnringfläche des zweiten Zapfenanteils und den Innenrohrfuß begrenzt bzw. definiert. Am zweiten Zapfenanteil weist der Wellenzapfen eine Zapfenwandöffnung oder mehr Zapfenwandöffnungen auf, wobei die jeweilige Zapfenwandöffnung eine Wellenzapfenwand des Wellenzapfens radiusparallel oder schräg zum Radius vollständig durchdringt. Dadurch kommunizieren das hohle Innere des Wellenzapfens und eine abtriebsseitige Mündung des Außenrohrs, aus der der erste Zapfenanteil aus dem Außenrohr herausragt, miteinander.

Das Verbindungsrohr der Rotorwelle ist insbesondere aus Kunststoff ausgebildet, zum Beispiel als ein Kunststoff-Spritzgussteil, und hat ein erstes Verbindungsrohrende, das außenumfangsseitig dicht an einer Wellenzapfeninnenwand im ersten Zapfenanteil anliegt. Ferner erstreckt sich das Verbindungsrohr durch den zweiten Zapfenanteil hindurch, wobei es aus dem zweiten Zapfenanteil herausragt. Indem das Verbindungsrohr aus dem zweiten Zapfenanteil herausragt, mündet es in das Innenrohr, wobei zwischen dem Innenrohr und dem Verbindungsrohr eine dichte Verbindung herrscht. Dabei ist zwischen der Verbindungsrohraußenwand und der Wellenzapfeninnenwand im zweiten Zapfenanteil ein Wellenzapfenringraum gebildet, wobei der Wellenzapfenringraum und der Außenrohrringraum miteinander kommunizieren bzw. miteinander verbunden sind. Eine Längsmittenachse des Verbindungsrohrs und die Längsmittenachsen des Außenrohrs, des Innenrohrs und des Wellenzapfens fallen zur Längsmittenachse der Rotorwelle zusammen.

Aufgrund dieser Anordnung des Außenrohrs, des Innenrohrs, des Wellenzapfens und des Verbindungsrohrs ist ein von einem Kühlmittel, insbesondere einem Öl, durchströmbarer Kühlmittelpfad gebildet. Im Betrieb der mit der Rotorwelle ausgestatteten Maschine wird das Kühlmittel in das hohle Innere des Wellenzapfens eingespeist. Hierzu ist eine Zuströmleitung eines Kühlmittel- bzw. Ölmoduls fluidisch mit einer Wellenzapfenmündung, das heißt mit dem hohlen Inneren, des Wellenzapfens gekoppelt. Beispielsweise kann ein hohler Stutzen in die Wellenzapfenmündung eingesetzt, insbesondere eingepresst sein, wobei zwischen der Zuströmleitung und der Wellenzapfenmündung eine Radialwellendichtung vorgesehen ist, die ein Entweichen des Kühlmittels bzw. Öls an der Kopplungsstelle zwischen der Zuströmleitung und dem Wellenzapfen verhindert. Das Öl wird zum Beispiel mittels einer Pumpe des Kühlmittel- bzw. Ölmoduls durch die Zuströmleitung hindurch- und dadurch in den Wellenzapfen und infolgedessen in die Rotorwelle hineingetrieben. Das Öl durchströmt den Wellenzapfen und tritt daraufhin in das Verbindungsrohr ein, da dieses mit seinem ersten Verbindungsrohrende dicht an der Wellenzapfeninnenwand im ersten Zapfenanteil anliegt, wodurch ein Entweichen des Öls zwischen dem Wellenzapfen und dem Verbindungsrohr verhindert ist. Weiter durchströmt das Öl das Verbindungsrohr und strömt in weiterer Folge aus diesem aus, wodurch es in das Innenrohr einströmt, da das Verbindungsrohr in das Innenrohr mündet. Das Öl tritt in weiterer Folge durch die Innenrohrwandöffnung oder -öffnungen aus dem Innenrohr aus und dadurch zwischen das Innen- und das Außenrohr, also in den Außenrohrringraum ein. Ferner strömt das Öl mittels der am Innenrohrfuß angeordneten Nuten bzw. Kanäle aus dem Innenrohr in den Außenrohrringraum ein. Hierbei sind Größe und Anzahl der jeweiligen Innenrohrwandöffnung bzw. der jeweiligen Nut so ausgebildet, dass ein Großteil des im Innenrohr befindlichen Öls über die Innenrohrwandöffnung bzw. -öffnungen in den Außenrohrringraum einströmt, wobei ein wesentlich kleinerer Teil des im Innenrohr befindlichen Öls über die Nut bzw. Nuten in den Außenrohrringraum einströmt. Dabei ist eine Endkante des Innenrohrs bzw. Innenrohrfußes von einem Verschlusselement der Rotorwelle beabstandet, sodass das Öl an der Endkante aus dem Innenrohr ausströmt, in die Kanäle/Nuten einströmt und so in den Außenrohrringraum einströmt. Im Außenrohrringraum streicht das Öl an der Außenrohrinnenwand entlang, wo es Wärme, die im Betrieb der Maschine erzeugt wird, aufnimmt und folglich abtransportiert. Denn indem das erwärmte Öl aus dem Außenrohrringraum ausströmt, strömt es zwischen die Verbindungsrohraußenwand und die Wellenzapfeninnenwand, das heißt in den Wellenzapfenringraum, von wo aus das Öl durch die Zapfenwandöffnung oder -öffnungen und schließlich durch die abtriebsseitige Mündung des Außenrohrs aus der Rotorwelle ausströmt. Insbesondere mündet die Rotorwelle mittels derer abtriebsseitigen Mündung in eine Getriebekammer eines an die Maschine angeflanschten Getriebes. Dabei ist insbesondere vorgesehen, dass das Kühlmittel, das zum Kühlen der Maschine eingesetzt wird, und ein Schmiermittel, das zum Schmieren des Getriebes eingesetzt wird, identisch sind. Mit anderen Worten: Der hier beschriebene Kühlmittelkreislauf kann ein Bestandteil eines Schmiermittelkreislaufs einer die Maschine und das Getriebe aufweisenden Anordnung sein.

Dank der Rotorwelle ist es ermöglicht, den Öl- bzw. Kühlmittelstrom besonders effizient an die Stellen/Komponenten der Rotorwelle bzw. der Maschine zu lenken, die einen besonders hohen Kühlungsbedarf aufweisen. So ist die besonders effiziente Entwärmung besagter Komponenten gewährleistet, und die Maschine wird zuverlässig vor einer Überhitzung geschützt. Insbesondere wenn die Maschine als die elektrische Traktionsmaschine im Kraftfahrzeug eingesetzt ist, wird ein Degradationsbetrieb der Maschine wirksam vermieden.

In einer möglichen Weiterbildung ist vorgesehen, dass das Verbindungsrohr an dessen Verbindungsrohraußenwand eine entlang der Längsmittenachse fluidisch durchströmbare Zentrierrippenanordnung aufweist, mittels derer das Verbindungsrohr im zweiten Zapfenanteil koaxial gelagert ist. Die Zentrierrippenanordnung weist drei oder mehr Zentrierrippen auf, wobei die jeweilige Zentrierrippe von der Verbindungsrohraußenwand radial nach außen hervorspringt. Bei der Rotorwelle sind dann die Verbindungsrohraußenwand und die Wellenzapfeninnenwand über eine Höhe der jeweiligen Zentrierrippe voneinander beabstandet, wobei die Zentrierrippenanordnung im Wellenzapfenringraum angeordnet ist oder sich in diesen zumindest hineinerstreckt. Entlang einer Außenumfangsrichtung des Verbindungsrohrs sind die Zentrierrippen voneinander gleichmäßig beabstandet, sodass zum einen Öl zwischen den Zentrierrippen hindurchströmen kann und zum anderen das Verbindungsrohr besonders sicher im Wellenzapfen zentriert gelagert ist.

Gemäß einer weiteren möglichen Ausführungsform ist vorgesehen, dass das Verbindungsrohr an dessen Verbindungsrohraußenwand einen entlang der Längsmittenachse fluidisch durchströmbaren Anstoßkragen aufweist, mittels dessen das Verbindungsrohr an einer Stirnringfläche des zweiten Zapfenanteils anstößt. Auf diese Weise ist verhindert, dass das Verbindungsrohr im Betrieb der Maschine in unbeabsichtigter Weise aus seiner bestimmungsgemäßen Einbaulage ausrückt und beispielsweise zu weit in den Wellenzapfen hineinwandert. Zudem ist ein Zusammenbauen der Rotorwelle vereinfacht. Der Anstoßkragen umfasst ein Anstoßelement oder mehr Anstoßelemente, wobei das jeweilige Anstoßelement in Axialrichtung, das heißt entlang der Längsmittenachse der Rotorwelle, direkt an der Stirnringfläche des zweiten Zapfenanteils zur Anlage gebracht ist. Sofern der Anstoßkragen zwei oder mehr Anstoßelemente aufweist, sind diese entlang der Außenumfangsrichtung des Verbindungsrohrs voneinander gleichmäßig beabstandet, sodass zum einen Öl zwischen den Anstoßelementen hindurchströmen kann und zum anderen das Verbindungsrohr besonders sicher am Wellenzapfen bzw. dessen Stirnringfläche axial gesichert ist. Insbesondere sind/ist die Zentrierrippenanordnung und/oder der Anstoßkragen einstückig bzw. monolithisch mit dem Verbindungsrohr ausgebildet. Das bedeutet, dass unter einem Urformen, insbesondere Spritzgießen, des Verbindungsrohrs die Zentrierrippenanordnung und/oder der Anstoßkragen mit urgeformt werden/wird.

Einer weiteren möglichen Ausgestaltung zufolge weist das Verbindungsrohr am ersten Verbindungsrohrende einen ersten Dichtungsringsitz auf. In diesem Zusammenhang weist die Rotorwelle einen ersten Dichtungsring auf, der im ersten Dichtungsringsitz und dadurch zwischen der Wellenzapfeninnenwand im ersten Zapfenanteil und der Verbindungsrohraußenwand fixiert ist. So ist die fluidisch dichte Verbindung zwischen dem Verbindungsrohr und dem hohlen Inneren des Wellenzapfens besonders zuverlässig. Zudem sind die abtriebsseitige Mündung des Außenrohrs und der Wellenzapfenringraum besonders sicher voneinander abgedichtet.

Eine weitere mögliche Ausführungsform sieht eine Verbindungshülse vor, mittels derer das Verbindungsrohr und das Innenrohr dicht miteinander verbunden sind, indem die Verbindungshülse ein dem Innenrohr zugewandtes, zweites Verbindungsrohrende und ein dem Verbindungsrohr zugewandtes Innenrohrende außenumfangsseitig umgreift bzw. umschließt. Dabei ist ein Außendurchmesser der Verbindungshülse kleiner als ein Innendurchmesser des Außenrohrs, sodass die Außenrohrinnenwand und die Verbindungshülse radial voneinander beabstandet sind. Auf diese Weise ist die Verbindungshülse im Außenrohrringraum angeordnet und wird im Betrieb außenseitig mit Öl umströmt. Mittels der Verbindungshülse sind das Verbindungsrohr und das Innenrohr besonders stabil und zuverlässig dicht miteinander verbunden.

Das Verbindungsrohr weist gemäß einer möglichen Weiterbildung am zweiten Verbindungsrohrende einen zweiten Dichtungsringsitz auf. In diesem Zusammenhang weist die Rotorwelle einen zweiten Dichtungsring auf, der im zweiten Dichtungsringsitz fixiert ist. Sofern die Rotorwelle die zuvor beschriebene Verbindungshülse aufweist, ist insbesondere vorgesehen, dass der im zweiten Dichtungsringsitz sitzende, zweite Dichtungsring zwischen der Verbindungsrohraußenwand und einer Verbindungshülseninnenwand der Verbindungshülse eingesetzt ist. So ist die fluidisch dichte Verbindung, die die Verbindungshülse zwischen dem Verbindungsrohr und Innenrohr vermittelt, besonders zuverlässig und besonders dicht. Aufgrund des ersten und/oder des zweiten Dichtungsrings sind der Außenrohrringraum und der Wellenzapfenringraum besonders sicher gegen das jeweilige hohle Innere des Wellenzapfens, des Verbindungsrohrs und des Innenrohrs abgedichtet, was eine besonders effiziente Kühlung der Rotorwelle unterstützt.

Die Kühlung der Rotorwelle erfolgt im Betrieb der Maschine noch effizienter, wenn - wie eine weitere mögliche Ausführungsform vorsieht - die Außenrohrinnenwand im Außenrohrringraum eine Oberflächenvergrößerungsstruktur aufweist. Die Oberflächenvergrößerungsstruktur weist zum Beispiel eine Vielzahl von Ringnuten und/oder Ringkerben auf, die voneinander äquidistant beabstandet sind oder direkt aneinander angrenzen. So ist eine Vielzahl von Vertiefungen gebildet, wobei die jeweilige Vertiefung sich in Radialrichtung ausgehend von der Außenrohrinnenwand in Richtung hin zu einer Außenrohraußenwand erstreckt. In dieser Ausführungsform weist der Außenrohrringraum dank der Oberflächenvergrößerungsstruktur eines besonders großflächige Außenrohrinnenwand des Außenrohrs auf, wodurch im Betrieb der Maschine besonders viel Öl gleichzeitig direkt am Material des Außenrohrs entlangstreicht. Dadurch kann bei gegebener Strömungsgeschwindigkeit des Öls besonders viel Wärme vom Außenrohr abtransportiert werden.

Wie bereits weiter oben erläutert, betrifft die Erfindung zudem das Verbindungsrohr für die Rotorwelle. Das Verbindungsrohr weist an dessen Verbindungsrohraußenwand einen entlang seiner Längsmittenachse fluidisch durchströmbaren Anstoßkragen auf, mittels dessen es an der Stirnringfläche des zweiten Zapfenanteils anstoßbar ist.

Weitere Merkmale der Erfindung können sich aus den Ansprüchen, den Figuren und der Figurenbeschreibung ergeben. Die vorstehend in der Beschreibung genannten Merkmale und Merkmalskombinationen sowie die nachfolgend in der Figurenbeschreibung und/oder in den Figuren allein gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen.

Die Zeichnung zeigt in:
- Fig. 1: eine geschnittene Ansicht einer Maschine, die eine Rotorwelle mit einem Verbindungsrohr aufweist,
- Fig. 2: eine geschnittene Ansicht des Verbindungsrohrs und
- Fig. 3: eine perspektivische Ansicht des Verbindungsrohrs.

Im Folgenden werden eine Rotorwelle 1 für eine Maschine 2, ein Verbindungsrohr 3 der Rotorwelle 1, die Maschine 2 sowie ein die Maschine 2 aufweisendes Kraftfahrzeug (nicht dargestellt) in gemeinsamer Beschreibung erläutert. In den Figuren sind gleiche und funktionsgleiche Elemente mit gleichem Bezugszeichen versehen.

Das Verbindungsrohr 3 bildet einen Bestandteil der Rotorwelle 1, wobei diese in deren bestimmungsgemäßer Einbaulage (wie in den Fig. dargestellt) einen Bestandteil der Maschine 2 bildet. Die Maschine 2 ist vorliegend als eine elektrische Traktionsmaschine ausgebildet, wobei das Kraftfahrzeug als reinelektrisch oder hybridelektrisch antreibbares Kraftfahrzeug die Traktionsmaschine 2 aufweist.

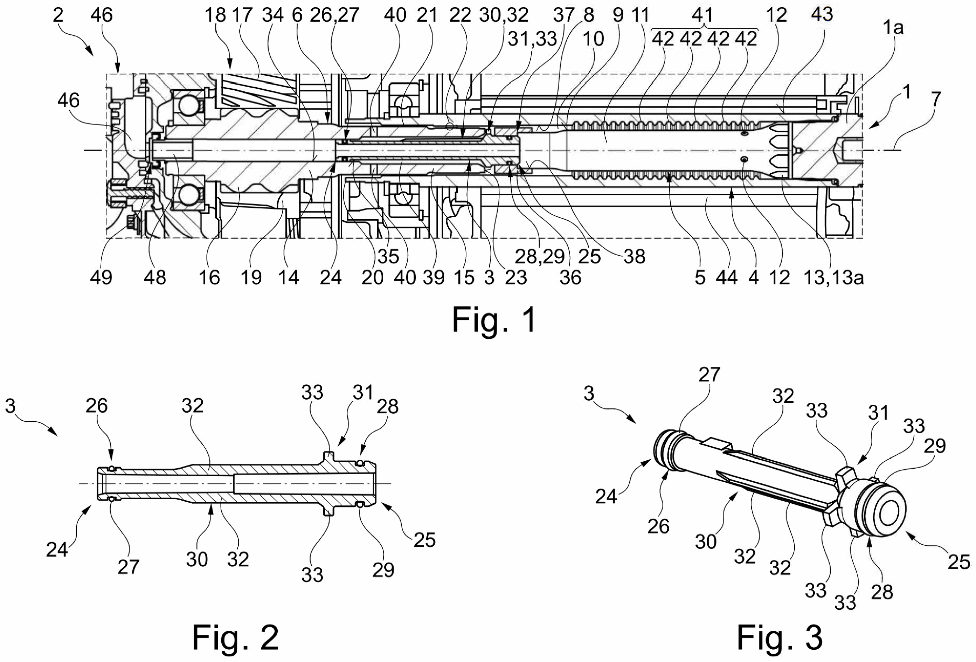

Fig. 1 zeigt eine geschnittene Ansicht der Maschine 2, deren Rotorwelle 1 das Verbindungsrohr 3 sowie ein Außenrohr 4, ein Innenrohr 5 und einen hohlen Wellenzapfen 6 aufweist. In Bezug auf eine Längsmittenachse 7 der Rotorwelle 1 sind das Außenrohr 4 und das Innenrohr 5 koaxial zueinander angeordnet, wobei zwischen einer Außenrohrinnenwand 8 und einer Innenrohraußenwand 9 ein Außenrohrringraum 10 gebildet ist. Der Außenrohrringraum 10 und ein hohler Innenraum 11 des Innenrohrs 5 kommunizieren miteinander, indem das Innenrohr 5 eine Innenrohrwandöffnung 12, vorliegend zwei oder mehr Innenrohrwandöffnungen 12, aufweist. Die Innenrohrwandöffnungen 12 sind in einem Nahbereich eines kegelförmigen Innenrohrfußes 13 des Innenrohrs 5 angeordnet, über welchen das Innenrohr 5 im Außenrohr 4 zentriert gelagert ist. Am kegelförmigen Innenrohrfuß 13, der ein erstes Ende des Innenrohrs 5 bildet, ist ein Außendurchmesser des Innenrohrs 5 gegenüber dem restlichen Innenrohr 5 aufgeweitet, und zwar bis auf das Maß eines Innendurchmessers des Außenrohrs 4, sodass das Innenrohr 5 über dessen Innenrohrfuß 13 an der Außenrohrinnenwand 8 anliegt. Entlang einer Außenumfangsrichtung des Innenrohrfußes 13 weist er axial angeordnete Nuten 13a auf, deren jeweiliger Nutboden und die Außenrohrinnenwand 8 radial voneinander beabstandet sind. So bilden die Nuten 13a und die Außenrohrinnenwand 8 miteinander axiale Kanäle. Dabei ist eine Endkante des Innenrohrs 5 bzw. Innenrohrfußes 13 von einem Verschlusselement 1a der Rotorwelle 1 beabstandet.

Der hohle Wellenzapfen 6 weist einen ersten Zapfenanteil 14 und einen zweiten Zapfenanteil 15 auf, die vorliegend einstückig miteinander ausgebildet sind. Der erste Zapfenanteil 14 trägt hier im Beispiel einen drehfesten Stirnradkranz 16, der mit einem maschinenexternen Antriebsstirnrad 17 eines an die Maschine 2 angeflanschten Getriebes 18 in dessen Getriebekammer 19 kämmt. Dabei ragt der erste Zapfenanteil 14 aus einer abtriebsseitigen Mündung 20 des Außenrohrs 4 heraus und dadurch in die Getriebekammer 19 hinein. Die Zapfenanteile 14, 15 gehen an einem Presssitzelement 21 des Wellenzapfens 6 ineinander über, wobei mittels des Presssitzelements 21 der Wellenzapfen 6 in das Außenrohr 4 eingepresst ist. Um eine Relativdrehung zwischen dem Wellenzapfen 4 und dem Außenrohr 4 zu sperren, ist vorliegend eine Keilverzahnung 22 zwischen dem Wellenzapfen 6 und dem Außenrohr 4 angeordnet. Die Keilverzahnung 22 ist insbesondere am zweiten Zapfenanteil 15 angeordnet, der koaxial im Außenrohr 4 angeordnet ist. Auf diese Weise sind der zweite Zapfenanteil 15 und die Außenrohrinnenwand 8 dicht und drehfest miteinander verbunden. Entlang der Längsmittenachse 7 der Rotorwelle 1 sind eine Stirnringfläche 23 des zweiten Zapfenanteils 15 und das Innenrohr 5 über einen geraden Abstand voneinander beabstandet.

Das Verbindungsrohr 3 - das in Fig. 2 und Fig. 3 isoliert in einer jeweiligen Ansicht dargestellt ist - weist ein erstes Verbindungsrohrende 24 und ein zweites Verbindungsrohrende 25 auf. Am ersten Verbindungsrohrende 24 ist vorliegend ein erster Dichtungsringsitz 26 angeordnet, in welchem bei der Rotorwelle 1 ein erster Dichtungsring 27 sitzt. Am zweiten Verbindungsrohrende 25 ist vorliegend ein zweiter Dichtungsringsitz 28 angeordnet, in welchem bei der Rotorwelle 1 ein zweiter Dichtungsring 29 sitzt. Zwischen den Enden 24, 25 weist das Verbindungsrohr 3 hier im Beispiel eine Zentrierrippenanordnung 30 und einen Anstoßkragen 31 auf, die jeweils fluidisch durchströmbar ausgeführt sind. Die Zentrierrippenanordnung 30 weist drei oder mehr, hier im Beispiel vier, Zentrierrippen 32 auf, wobei der Anstoßkragen zumindest ein Anstoßelement 33, im vorliegenden Beispiel vier Anstoßelemente 33, aufweist.

In Fig. 1 ist zu erkennen, dass zwischen dem Wellenzapfen 6 und dem Innenrohr 5 das Verbindungsrohr 3 angeordnet ist, dessen erstes Verbindungsrohrende 24 im ersten Zapfenanteil 14 außenumfangsseitig dicht an einer Wellenzapfeninnenwand 34 des Wellenzapfens 6 anliegt. Vorliegend ist der im ersten Dichtungsringsitz 26 sitzende, erste Dichtungsring 27 zwischen der Wellenzapfeninnenwand 34 und einer Verbindungsrohraußenwand 35 eingespannt. Anders ausgedrückt ist der erste Dichtungsring 27 mittels des ersten Dichtungsringsitzes 26 zwischen der Wellenzapfeninnenwand 34 im ersten Zapfenanteil 14 und der Verbindungsrohraußenwand 35 fixiert. Das Verbindungsrohr 3 erstreckt sich durch den zweiten Zapfenanteil 15 hindurch und ist dabei mittels der Zentrierrippenanordnung 30 bzw. Zentrierrippen 32 im zweiten Zapfenanteil 15 koaxial gelagert. An der Stirnringfläche 23 des zweiten Zapfenanteils 15 stößt das Verbindungsrohr 3 über dessen Anstoßkragen 31 bzw. Anstoßelement 33 an. Weiter ragt das Verbindungsrohr 3 aus dem zweiten Zapfenanteil 15 heraus und überbrückt so den Abstand, über den der zweite Zapfenanteil 15 und das Innenrohr 5 voneinander beabstandet sind. Dabei mündet das Verbindungsrohr 3 an seinem zweiten Verbindungsrohrende 25 dicht in das Innenrohr 5 bzw. in dessen hohlen Innenraum 11. Im vorliegenden Beispiel sind das Verbindungsrohr 3 und das Innenrohr 5 mittels einer Verbindungshülse 36 dicht miteinander verbunden, die das zweite Verbindungsrohrende 25 und ein dem Verbindungsrohr 3 zugewandtes Innenrohrende 37 außenumfangsseitig umschließt. Dabei wird mittels des zweiten Dichtungsringsitzes 28 der zweite Dichtungsring 29 zwischen der Verbindungsrohraußenwand 35 und einer Verbindungshülseninnenwand 38 der Verbindungshülse 36 fixiert. Zwischen der Verbindungsrohraußenwand 35 und der Wellenzapfeninnenwand 34 ist im zweiten Zapfenanteil 15 ein mit dem Außenrohrringraum 10 kommunizierender Wellenzapfenringraum 39 gebildet. Am ersten Zapfenanteil 14 weist der Wellenzapfen 6 eine Zapfenwandöffnung 40, vorliegend zwei oder mehr Zapfenwandöffnungen 40, auf, über welche der Wellenzapfenringraum 39 und die abtriebsseitige Mündung 20 des Außenrohrs 4 miteinander kommunizieren. Die abtriebsseitige Mündung 20, die hier im Beispiel in die Getriebekammer 19 mündet, und der Wellenzapfenringraum 39 sind außenumfangsseitig des Wellenzapfens 6 voneinander fluidisch abgedichtet, hier mittels des Presssitzelements 21.

Aus Fig. 1 geht des Weiteren hervor, dass die Außenrohrinnenwand 8 gemäß dem vorliegenden Beispiel im Außenrohrringraum 10 eine Oberflächenvergrößerungsstruktur 41 aufweist, die eine Vielzahl von Ringkerben 42 aufweist. Die Ringkerben 42 bilden jeweils eine Vertiefung, die sich in Radialrichtung ausgehend von der Außenrohrinnenwand 8 in Richtung hin zu einer Außenrohraußenwand 43 erstreckt. Da es sich bei der Maschine 2 hier um eine elektrische Maschine handelt, ist an der Außenrohraußenwand 43 ein Rotorpaket 44 drehfest befestigt.

Im Betrieb der Maschine 2 wird das insbesondere als Öl ausgebildete Kühlmittel in den Wellenzapfen 6 eingespeist. Hierzu ist eine Zuströmleitung 45 eines Kühlmittel- bzw. Ölmoduls 46 fluidisch mit einer Wellenzapfenmündung 47 des Wellenzapfens 6 gekoppelt.

Hier im Beispiel ist ein hohler Stutzen 48 in die Wellenzapfenmündung 47 eingepresst, wobei zwischen der Zuströmleitung 47 und der Wellenzapfenmündung 47 eine Radialwellendichtung 49 vorgesehen ist. Das Öl wird mittels einer Pumpe des Kühlmittel- bzw. Ölmoduls 16 durch die Zuströmleitung 45 hindurch- und so in den Wellenzapfen 6 hineingetrieben, woraufhin das Öl den Wellenzapfen 6 durchströmt und in das Verbindungsrohr 3 eintritt. Weiter durchströmt das Öl das Verbindungsrohr 3 und dann aus diesem aus, das heißt in das Innenrohr 5 hinein. Danach strömt das Öl durch die Innenrohrwandöffnungen 12 sowie durch die Kanäle 13a aus dem Innenrohr 5 aus und dadurch in den Außenrohrringraum 10 ein. Dort streicht das Öl an der Außenrohrinnenwand 8, insbesondere an der Oberflächenvergrößerungsstruktur 41, entlang, wo es Wärme, die im Betrieb der Maschine 2 erzeugt wird, aufnimmt und abtransportiert. Das erwärmte Öl strömt aus dem Außenrohrringraum 10 in den Wellenzapfenringraum 39, von wo aus es durch die Zapfenwandöffnungen 40 und schließlich durch die abtriebsseitige Mündung 20 des Außenrohrs 4 aus der Rotorwelle 1 ausströmt. Da die Rotorwelle 1 hier im Beispiel mittels der abtriebsseitigen Mündung 20 in die Getriebekammer 19 des Getriebes 18 mündet, tritt das aus der Rotorwelle 1 ausströmende Öl in die Getriebekammer 19 ein.

Durch die Rotorwelle 1, insbesondere deren Verbindungsrohr 3, die Maschine 2 und das Kraftfahrzeug ist eine jeweilige Möglichkeit aufgezeigt, wie eine Rotorwelle einer Maschine, insbesondere einer elektrischen Maschine, noch effizienter kühlbar ist. Kerngedanke der Erfindung ist es, durch die hierin beschriebene Bauteiltopologie eine gezielte Strömungsführung des Kühlungsmediums Öl in thermisch hoch belastete Zonen der Rotorwelle 1 zu gewährleisten. Auf diesem Weg wird gezielt Wärme optimal aus dem System abgeführt, wodurch eine Überhitzung des Rotors und in weitere Folge ein Degradationsbetrieb der Maschine 2 vermieden wird.

### Bezugszeichenliste

- 1: Rotorwelle
- 1a: Verschlusselement
- 2: Maschine
- 3: Verbindungsrohr
- 4: Außenrohr
- 5: Innenrohr
- 6: Wellenzapfen
- 7: Längsmittenachse
- 8: Außenrohrinnenwand
- 9: Innenrohraußenwand
- 10: Außenrohrringraum
- 11: Innenraum des Innenrohrs
- 12: Innenrohrwandöffnung
- 13: Innenrohrfuß
- 13a: Nut
- 14: erster Zapfenanteil
- 15: zweiter Zapfenanteil
- 16: Stirnradkranz
- 17: Antriebsstirnrad
- 18: Getriebe
- 19: Getriebekammer
- 20: abtriebsseitige Mündung
- 21: Presssitzelement
- 22: Keilverzahnung
- 23: Stirnringfläche
- 24: erstes Verbindungsrohrende
- 25: zweites Verbindungsrohrende
- 26: erster Dichtungsringsitz
- 27: erster Dichtungsring
- 28: zweiter Dichtungsringsitz
- 29: zweiter Dichtungsring
- 30: Zentrierrippenanordnung
- 31: Anstoßkragen
- 32: Zentrierrippe
- 33: Anstoßelement
- 34: Wellenzapfeninnenwand
- 35: Verbindungsrohraußenwand
- 36: Verbindungshülse
- 37: Innenrohrende
- 38: Verbindungshülseninnenwand
- 39: Wellenzapfenringraum
- 40: Zapfenwandöffnung
- 41: Oberflächenvergrößerungsstruktur
- 42: Ringkerben
- 43: Außenrohraußenwand
- 44: Rotorpaket
- 45: Zuströmleitung
- 46: Kühlmittel- bzw. Ölmodul
- 47: Wellenzapfenmündung
- 48: Stutzen
- 49: Radialwellendichtung

## Patentansprüche

1. Rotorwelle (1) für eine Maschine (2), aufweisend,
- ein Außenrohr (4),
- ein Innenrohr (5), das koaxial im Außenrohr (4) angeordnet ist, wobei zwischen einer Außenrohrinnenwand (8) und einer Innenrohraußenwand (9) ein Außenrohrringraum (10) gebildet ist, und das Innenrohr (5) eine Innenrohrwandöffnung (12) aufweist,
- einen hohlen Wellenzapfen (6), dessen erster Zapfenanteil (14) aus dem Außenrohr (4) herausragt, wobei ein zweiter Zapfenanteil (15) des Wellenzapfens (6) koaxial im Außenrohr (4) angeordnet ist, entlang einer Längsmittenachse (7) der Rotorwelle (1) vom Innenrohr (5) beabstandet ist und mit der Außenrohrinnenwand (8) dicht und drehfest verbunden ist und eine Zapfenwandöffnung (40) aufweist,
- ein Verbindungsrohr (3), dessen erstes Verbindungsrohrende (24) außenumfangsseitig dicht an einer Wellenzapfeninnenwand (34) im ersten Zapfenanteil (14) anliegt, wobei das Verbindungsrohr (3) sich durch den zweiten Zapfenanteil (15) hindurcherstreckt, aus dem zweiten Zapfenanteil (15) herausragt und dadurch dicht in das Innenrohr (5) mündet, wobei zwischen einer Verbindungsrohraußenwand (35) und der Wellenzapfeninnenwand (34) im zweiten Zapfenanteil (15) ein mit dem Außenrohrringraum (10) kommunizierender Wellenzapfenringraum (39) gebildet ist.

2. Rotorwelle (1) nach Anspruch 1,
**dadurch gekennzeichnet, dass**
das Verbindungsrohr (3) an dessen Verbindungsrohraußenwand (35) eine entlang der Längsmittenachse (7) fluidisch durchströmbare Zentrierrippenanordnung (30) aufweist, mittels derer das Verbindungsrohr (3) im zweiten Zapfenanteil (15) koaxial gelagert ist.

3. Rotorwelle (1) nach Anspruch 1 oder 2,
**dadurch gekennzeichnet, dass**
das Verbindungsrohr (3) an dessen Verbindungsrohraußenwand (35) einen entlang der Längsmittenachse (7) fluidisch durchströmbaren Anstoßkragen (31) aufweist, mittels dessen das Verbindungsrohr (3) an einer Stirnringfläche (23) des zweiten Zapfenanteils (15) anstößt.

4. Rotorwelle (1) nach einem der vorhergehenden Ansprüche,
**dadurch gekennzeichnet, dass**
das Verbindungsrohr (3) am ersten Verbindungsrohrende (24) einen ersten Dichtungsringsitz (26) aufweist, wobei im ersten Dichtungsringsitz (26) und dadurch zwischen der Wellenzapfeninnenwand (34) im ersten Zapfenanteil (14) und der Verbindungsrohraußenwand (35) ein erster Dichtungsring (27) fixiert ist.

5. Rotorwelle (1) nach einem der vorhergehenden Ansprüche,
**dadurch gekennzeichnet, dass**
das Verbindungsrohr (3) und das Innenrohr (5) mittels einer Verbindungshülse (36) dicht miteinander verbunden sind, die ein dem Innenrohr (5) zugewandtes, zweites Verbindungsrohrende (25) und ein dem Verbindungsrohr (3) zugewandtes Innenrohrende (37) außenumfangsseitig umgreift.

6. Rotorwelle (1) nach einem der vorhergehenden Ansprüche,
**dadurch gekennzeichnet, dass**
das Verbindungsrohr (3) am zweiten Verbindungsrohrende (25) einen zweiten Dichtungsringsitz (28) aufweist, in welchem ein zweiter Dichtungsring (29) fixiert ist, insbesondere zwischen der Verbindungsrohraußenwand (35) und einer Verbindungshülseninnenwand (38) der nach Anspruch 5 ausgeführten Verbindungshülse (36).

7. Rotorwelle (1) nach einem der vorhergehenden Ansprüche,
**dadurch gekennzeichnet, dass**
die Außenrohrinnenwand (8) im Außenrohrringraum (10) eine Oberflächenvergrößerungsstruktur (41) aufweist.

8. Maschine (2), insbesondere elektrische Traktionsmaschine (2) für ein Kraftfahrzeug, mit einer nach einem der Ansprüche 1 bis 7 ausgeführten Rotorwelle (1).

9. Kraftfahrzeug mit einer nach Anspruch 8 ausgeführten Maschine (2).

10. Verbindungsrohr (3) für eine nach einem der Ansprüche 1 bis 7 ausgeführte Rotorwelle (1), das an dessen Verbindungsrohraußenwand (35) einen entlang seiner Längsmittenachse (7) fluidisch durchströmbaren Anstoßkragen (31) aufweist, mittels dessen das Verbindungsrohr (3) an einer Stirnringfläche (23) des zweiten Zapfenanteils (15) anstoßbar ist.

## Claims

1. Rotor shaft (1) for a machine (2), comprising,
- an outer tube (4),
- an inner tube (5) which is arranged coaxially in the outer tube (4), wherein an outer tube annular space (10) is formed between an outer tube inner wall (8) and an inner tube outer wall (9), and the inner tube (5) has an inner tube wall opening (12),
- a hollow shaft journal (6), the first journal portion (14) of which protrudes from the outer tube (4), wherein a second journal portion (15) of the shaft journal (6) is arranged coaxially in the outer tube (4), is spaced apart from the inner tube (5) along a longitudinal central axis (7) of the rotor shaft (1) and is connected to the outer tube inner wall (8) in a sealed and rotationally fixed manner and has a journal wall opening (40),
- a connecting tube (3), the first connecting tube end (24) of which bears sealingly on an outer circumferential side against a shaft journal inner wall (34) in the first journal portion (14), wherein the connecting tube (3) extends through the second journal portion (15), protrudes from the second journal portion (15) and thereby opens sealingly into the inner tube (5), wherein between a connecting tube outer wall (35) and the shaft journal inner wall (34) in the second journal portion (15) a shaft journal annular space (39) communicating with the outer tube annular space (10) is formed.

2. Rotor shaft (1) according to claim 1,
**characterized in that**
the connecting tube (3) has on its connecting tube outer wall (35) a centering rib arrangement (30) which can be fluidically flowed through along the longitudinal central axis (7), by means of which the connecting tube (3) is mounted coaxially in the second journal portion (15).

3. Rotor shaft (1) according to claim 1 or 2,
**characterized in that**
the connecting tube (3) has on its connecting tube outer wall (35) an abutment collar (31) which can be fluidically flowed through along the longitudinal central axis (7), by means of which the connecting tube (3) abuts against an end annular surface (23) of the second journal portion (15).

4. Rotor shaft (1) according to one of the preceding claims,
**characterized in that**
the connecting tube (3) has at the first connecting tube end (24) a first sealing ring seat (26), wherein in the first sealing ring seat (26) and thereby between the shaft journal inner wall (34) in the first journal portion (14) and the connecting tube outer wall (35) a first sealing ring (27) is fixed.

5. Rotor shaft (1) according to one of the preceding claims,
**characterized in that**
the connecting tube (3) and the inner tube (5) are sealingly connected to one another by means of a connecting sleeve (36) which engages around an outer circumferential side of a second connecting tube end (25) facing the inner tube (5) and an inner tube end (37) facing the connecting tube (3).

6. Rotor shaft (1) according to one of the preceding claims,
**characterized in that**
the connecting tube (3) has at the second connecting tube end (25) a second sealing ring seat (28) in which a second sealing ring (29) is fixed, in particular between the connecting tube outer wall (35) and a connecting sleeve inner wall (38) of the connecting sleeve (36) configured according to claim 5.

7. Rotor shaft (1) according to one of the preceding claims,
**characterized in that**
the outer tube inner wall (8) has in the outer tube annular space (10) a surface enlargement structure (41).

8. Machine (2), in particular electric traction machine (2) for a motor vehicle, with a rotor shaft (1) configured according to one of claims 1 to 7.

9. Motor vehicle with a machine (2) configured according to claim 8.

10. Connecting tube (3) for a rotor shaft (1) configured according to one of claims 1 to 7, which has on its connecting tube outer wall (35) an abutment collar (31) which can be fluidically flowed through along its longitudinal central axis (7), by means of which the connecting tube (3) can abut against an end annular surface (23) of the second journal portion (15).

## Revendications

1. Arbre de rotor (1) pour une machine (2), comportant,
- un tube extérieur (4),
- un tube intérieur (5) qui est disposé coaxialement dans le tube extérieur (4), un espace annulaire de tube extérieur (10) étant formé entre une paroi intérieure de tube extérieur (8) et une paroi extérieure de tube intérieur (9), et le tube intérieur (5) présentant une ouverture de paroi de tube intérieur (12),
- un tourillon d'arbre creux (6) dont la première partie de tourillon (14) fait saillie hors du tube extérieur (4), une deuxième partie de tourillon (15) du tourillon d'arbre (6) étant disposée coaxialement dans le tube extérieur (4), étant espacée du tube intérieur (5) le long d'un axe central longitudinal (7) de l'arbre de rotor (1) et étant reliée à la paroi intérieure de tube extérieur (8) de manière étanche et solidaire en rotation et présentant une ouverture de paroi de tourillon (40),
- un tube de liaison (3) dont la première extrémité de tube de liaison (24) repose de manière étanche sur un côté de circonférence extérieure contre une paroi intérieure de tourillon d'arbre (34) dans la première partie de tourillon (14), le tube de liaison (3) s'étendant à travers la deuxième partie de tourillon (15), faisant saillie hors de la deuxième partie de tourillon (15) et débouchant ainsi de manière étanche dans le tube intérieur (5), un espace annulaire de tourillon d'arbre (39) communiquant avec l'espace annulaire de tube extérieur (10) étant formé entre une paroi extérieure de tube de liaison (35) et la paroi intérieure de tourillon d'arbre (34) dans la deuxième partie de tourillon (15).

2. Arbre de rotor (1) selon la revendication 1,
**caractérisé en ce que**
le tube de liaison (3) présente sur sa paroi extérieure de tube de liaison (35) un agencement de nervures de centrage (30) pouvant être traversé par un fluide le long de l'axe central longitudinal (7), au moyen duquel le tube de liaison (3) est monté coaxialement dans la deuxième partie de tourillon (15).

3. Arbre de rotor (1) selon la revendication 1 ou 2,
**caractérisé en ce que**
le tube de liaison (3) présente sur sa paroi extérieure de tube de liaison (35) un collet de butée (31) pouvant être traversé par un fluide le long de l'axe central longitudinal (7), au moyen duquel le tube de liaison (3) vient en butée contre une surface annulaire frontale (23) de la deuxième partie de tourillon (15).

4. Arbre de rotor (1) selon l'une des revendications précédentes,
**caractérisé en ce que**
le tube de liaison (3) présente à la première extrémité de tube de liaison (24) un premier siège de bague d'étanchéité (26), une première bague d'étanchéité (27) étant fixée dans le premier siège de bague d'étanchéité (26) et ainsi entre la paroi intérieure de tourillon d'arbre (34) dans la première partie de tourillon (14) et la paroi extérieure de tube de liaison (35).

5. Arbre de rotor (1) selon l'une des revendications précédentes,
**caractérisé en ce que**
le tube de liaison (3) et le tube intérieur (5) sont reliés l'un à l'autre de manière étanche au moyen d'un manchon de liaison (36) qui entoure sur un côté de circonférence extérieure une deuxième extrémité de tube de liaison (25) tournée vers le tube intérieur (5) et une extrémité de tube intérieur (37) tournée vers le tube de liaison (3).

6. Arbre de rotor (1) selon l'une des revendications précédentes,
**caractérisé en ce que**
le tube de liaison (3) présente à la deuxième extrémité de tube de liaison (25) un deuxième siège de bague d'étanchéité (28) dans lequel une deuxième bague d'étanchéité (29) est fixée, en particulier entre la paroi extérieure de tube de liaison (35) et une paroi intérieure de manchon de liaison (38) du manchon de liaison (36) réalisé selon la revendication 5.

7. Arbre de rotor (1) selon l'une des revendications précédentes,
**caractérisé en ce que**
la paroi intérieure de tube extérieur (8) présente dans l'espace annulaire de tube extérieur (10) une structure d'agrandissement de surface (41).

8. Machine (2), en particulier machine de traction électrique (2) pour un véhicule automobile, avec un arbre de rotor (1) réalisé selon l'une des revendications 1 à 7.

9. Véhicule automobile avec une machine (2) réalisée selon la revendication 8.

10. Tube de liaison (3) pour un arbre de rotor (1) réalisé selon l'une des revendications 1 à 7, qui présente sur sa paroi extérieure de tube de liaison (35) un collet de butée (31) pouvant être traversé par un fluide le long de son axe central longitudinal (7), au moyen duquel le tube de liaison (3) peut venir en butée contre une surface annulaire frontale (23) de la deuxième partie de tourillon (15).
